# EUROPEAN PATENT SPECIFICATION

(11) **EP 4 164 400 B1**
(45) Date of publication and mention of the grant of the patent: **28.02.2024**
(21) Application number: 21727911.6
(22) Date of filing: 31.05.2021
(51) Int. Cl.: A23D 7/005, A23L 27/00

(54) **OIL-IN-WATER EMULSIFIED FOOD COMPOSITION COMPRISING PLANT PROTEIN**
ÖL-IN-WASSER-EMULSIONSZUSAMMENSETZUNG ENTHALTEND PFLANZENPROTEIN
COMPOSITION ALIMENTAIRE ÉMULSIFIÉE HUILE DANS L'EAU COMPRENANT DES PROTÉINES VÉGÉTALES

(30) Priority: 10.06.2020 EP 20179206
(43) Date of publication of application: 19.04.2023
(73) Proprietor: Unilever IP Holdings B.V., 3013 AL Rotterdam (NL)
(72) Inventor: VERMAAS, Arie, 6708 WH Wageningen (NL)
(74) Representative: Keenan, Robert Daniel
(86) International application number: PCT/EP2021/064566
(87) International publication number: WO 2021/249811

(56) References cited:
- WO-A1-2013/092086
- WO-A1-2017/080872
- WO-A1-2019/057407
- US-A1- 2019 364 941
- US-A1- 2019 364 948
- HERMEY B ET AL: "CHARAKTERISTIKA VERSCHIEDENER SENSAAT-TYPEN UND DEREN ANWENDUNG IN DER LEBENSMITTELHERSTELLUNG. CHARACTERISTICS OF VARIOUS TYPES OF MUSTARD SEED AND THEIR USE IN FOOD MANUFACTURE", FLEISCHEREI, BAD WRISHOFEN, DE, vol. 45, no. 11, 1 January 1994 (1994-01-01), pages 46, 48-50, XP002064137, ISSN: 0015-3613

## Description

The present invention relates to an oil-in-water emulsified food composition comprising vegetable oil, water, and plant protein. It further relates to a process to manufacture said food composition.

### Background

Oil-in-water emulsified food product are commonly based on the emulsification of oil droplets of vegetable oil that are emulsified in a continuous water phase. A stable texture of the emulsion is obtained by the use of an emulsifier, which is often egg-based, such as egg yolk or a fraction thereof. The emulsifier prevents coalescing of the oil droplets, thereby maintaining the oil droplets in dispersed form, which provides the semi-solid texture of for example a mayonnaise.

Consumers increasingly favor emulsified food compositions wherein the emulsifier is plant based, at least wherein the use of animal-based ingredients in reduced or even absent. Indeed, several oil-in-water emulsified food compositions are on the market that use emulsifiers that originate from plants, such as plant proteins. The application of plant-based emulsifiers in oil-water emulsions brings its own set of challenges. This is, because the consumer is used to egg-based oil-in-water emulsions, like traditional mayonnaises, and the plant-based alternative product is expected to mimic the egg-based equivalent as much as possible, for example in terms of the texture of the product. Plant-based oil-in-water emulsions and their challenges have been described.

It was observed that when plant protein is used as an emulsifier in oil-in-water emulsified food products, the texture of the food product is affected, an unappealing 'curdled' appearance is observed, resembling cottage cheese, and the texture becomes harder upon storage. This effect may appear already within several days after production. The effect is observed in compositions with a relatively high oil content, for example in the area of from 65 to 80 wt% of oil. Low oil compositions appeared not to show this effect, or at least to a much lesser extent.

WO2017/080872A1 relates to a process for the manufacture of an aqueous dispersion comprising mustard bran and an oil-in-water emulsion comprising such emulsion.

US2019/0364948A1 relates to non-egg compositions that can be used as egg substitutes.

WO2013/092086 relates to an edible oil in water emulsion that comprises a small quantity of ground pulse seed in combination with seed mucilage gum.

A need therefore remained for an oil-in-water emulsion with a relatively high oil level (65-80 wt%) that uses plant protein as emulsifier, and a smooth texture (not a 'curdled'-like appearance), which preferably has an efficient production process.

### Summary of the invention

It was surprisingly found, that this problem could be overcome, by the use of bran of mustard or cereal. Accordingly, in a first aspect, the present invention relates to an oil-in-water emulsified food composition comprising:
- Water,
- Vegetable oil, in an amount of from 65 to 80 wt%, based on the weight of the food composition.
- Plant protein,
- Bran of mustard seed or of cereal grain.

In a further aspect, the present invention relates to a process to manufacture a composition of the invention, the process comprising the steps of:
a) providing a water phase comprising water and bran of mustard seed or of cereal grain;
b) heating the water phase to a temperature of above 65 °C,
c) homogenizing the water phase, wherein step b) and c) can be carried out in any order,
d) adding plant protein after both step b) and c) have been carried out,
e) adding vegetable oil to the water phase after both steps b) and c) have been carried out, wherein step d) and e) can be carried out in any order,
f) homogenizing the combination resulting from carrying out steps a) to e), to result in an oil-in-water emulsified food composition.

### Detailed description of the invention

All percentages, unless otherwise stated, refer to the percentage by weight (wt%). "Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

### Emulsion

In a first aspect, the invention relates to an oil-in-water emulsified food composition. Examples of oil-in-water emulsions encompassed by the present invention include emulsified sauces, such as mayonnaise, and dressings. Preferably, the food composition is a mayonnaise or a salad dressing, and most preferably a mayonnaise. Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. In the art, this kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions. Mayonnaises in the context of the present invention do not necessarily need to conform to a standard of identity in any country.

### Oil

It was observed, that at high oil levels, higher than 65 wt%, preferably higher than 70 wt%, the texture of an emulsified food composition becomes inhomogeneous, when a general plant protein is used as emulsifier instead of egg-derived emulsifier such as egg yolk. The appearance of the composition resembles that of a curdled product, with an inhomogeneous texture, like for example cottage cheese. At stable oil-in-water emulsions with low oil levels this problem appears not to be present.

The present invention solves the problem of an inhomogeneous texture in an emulsified food composition comprising plant protein that occurs at high oil levels. In the present invention, the concentration of vegetable oil ranges from 65 to 85 wt%, preferably from 65% to 80%, even more preferably of from 70 to 78%, based on the weight of the composition. Any combination of ranges using these mentioned end points are considered to be part of the invention as well.

Vegetable oil is known in the art, and include oils derived from e.g. plants, such as from for example nuts or seeds from plants. In the context of this invention, 'vegetable oil' also includes oil from algae. Preferred oils for use in the context of this invention are vegetable oils which are liquid at 20 °C, preferably, which are liquid at 5°C. Preferably the oil comprises an oil selected from the group consisting of sunflower oil, rapeseed oil, olive oil, soybean oil, and combinations of these oils. Most preferred, the oil is soybean oil or rapeseed oil.

### Water

The composition of the invention comprises water. The total amount of water is preferably of from 15 to 35%, more preferably of from 20 to 35 wt%, even more preferably of from 25 to 30 wt%, based on the weight of the composition. Any combination of ranges using these mentioned end points are considered to be part of the invention as well.

### Emulsifier

The composition of the invention comprises an oil-in-water emulsifier. An emulsifier serves to disperse oil droplets in the continuous aqueous phase of an oil-in-water emulsion. Conventionally, many oil-in-water emulsified food compositions such as mayonnaises are made with egg-derived emulsifiers, such as egg yolk. According to the invention, the composition comprises plant protein. The composition of the invention preferably is free of animal protein. It is preferably free of egg-derived protein. It is preferably free of egg yolk.

Plant protein is preferably protein from pulse seeds or oil seeds, tuber or a mixture thereof. In the present invention plant protein is present in the composition in an amount of from 0.3 to 5 wt%, based on the weight of the composition. Preferably, the amount of plant protein is of between 0.5 and 2.5 wt%, preferably of between 0.7 and 1.5 wt%, based on the weight of the composition. An amount for example may be preferred of more than 0.5 wt%. An amount may be preferred of less than 1.1 wt%, based on the weight of the composition. Especially when the plant protein is potato protein, a preferred amount is from 0.5 to 1.1 wt%, based on the weight of the composition. The plant protein is preferably selected from the group consisting of pulse protein, oil seed protein, potato protein and mixtures thereof. Preferably the plant protein is pulse or potato protein. It may be preferred that the plant protein is potato protein. Pulse is the family of *Fabaceae.* Pulse protein is preferably selected from the group consisting of pea protein, lentil protein, chickpea protein, lupin protein, faba bean protein, soy protein and mixtures thereof. Preferably pulse protein is selected from the group consisting of pea protein, lentil protein, chickpea protein and mixtures thereof. More preferably the pulse protein is selected from the group consisting of pea protein, lentil protein and mixtures thereof. Most preferred, the pulse protein is pea protein (*pisum sativum*). Oil seed protein is preferably selected from the group consisting of rape seed protein, canola protein and mixtures thereof, preferably is rape seed protein.

More preferably, the plant protein is selected from the group consisting of potato protein, pea protein, chickpea protein, lentil protein, soy protein and mixtures thereof. It can however be preferred that the composition does not comprise soy protein. Accordingly, even more preferably, the plant protein is selected from the group consisting of potato protein, pea protein, chickpea protein, lentil protein and mixtures thereof. It can be even preferred, that the plant protein is potato protein.

The plant protein is preferably protein wherein the molar weight of the protein is from 250 to 400, more preferably of from 280 to 350 grams per mole. Preferably, potato protein is preferably potato protein with a molecular weight of from 250 to 400, more preferably of from 280 to 350 grams per mole.

The plant protein is preferably native plant protein, preferably the plant protein is not hydrolysed plant protein, it is preferably not treated with protease.

### Bran

At a relatively high oil content, such as more than 65 wt%, it appeared that an oil-in-water emulsified food composition wherein plant protein, such as pulse protein or potato protein, has an appearance that is not smooth but has a rough appearance, resembling that of cottage cheese. It was surprisingly found, that when the presence of bran of cereal grain or mustard seed, preferably of mustard seed, overcomes this problem, and results in a smooth texture as known from an equivalent composition using egg yolk as emulsifier.

Bran, also known as miller's bran, is the hard outer layers of cereal grain. It consists of the combined aleurone and pericarp. Along with germ, it is an integral part of whole grains, and is often produced as a by-product of milling in the production of refined grains. Bran is present in cereal grain, including rice, corn (maize), wheat, oats, barley, rye and millet. Bran is not the same as chaff, which is a coarser scaly material surrounding the grain but not forming part of the grain itself, and which is indigestable to humans. When mustard seeds are ground to powder in a mill, the outer layer separates out as mustard bran. Mustard bran is (commercially) available in particulate (powdered) form. Mustard bran is thus a different material than whole mustard seed, ground mustard seed or mustard paste. Mustard paste is typically prepared from either ground whole mustard seed or from ground mustard seed from which the mustard bran has been previously removed.

If the bran is derived from cereal grain, preferably the cereal grain is selected from the group consisting of rice, corn, wheat, oats, barley, rye, millet and mixtures thereof. If the bran is derived from mustard seed, the bran is preferably derived from *Sinapis alba.* It is preferably deheated bran. In a deheating process, the myrosinase enzyme is inactivated.

The bran is preferably used in an amount of from 0.2 to 2 wt%, preferably from 0.3 to 1.5 wt%, more preferably of from 0.3 to 1 wt%, based on the weight of the food composition. It is preferred, that more than 80 wt%, dry weight, based on dry weight of the total amount of bran in the composition, is mustard bran, most preferably, the bran is mustard bran, most preferably from *Sinapis alba.*

The bran is treated with high pressure homogenisation. The size of the bran particles is consequently small, as it is reduced by the HPH treatment. Preferably before the HPH treatment the bran particles, preferably mustard bran particles, have a d(0.9) value of at least 750 microns, more preferably at least 800 microns, even more preferably at least 900 microns and still even more preferably at least 1000 microns. Preferably, after the HPH treatment, the bran particles have a d(0.9) of at most 600 microns, more preferably of at most 500 microns, even more preferably of at most 400 microns, still even more preferably of at most 350 microns and still even more preferably of from 150 to 300 microns. The d(0.9) value is used to indicate the bran particle size and is defined as the 90 volume % of the particles having the indicated size or lower. The d(0.9) value is measured as set out below in the Examples section.

If high pressure homogenisation is applied, it is preferably with a pressure drop of from 300 to 2000 bar, preferably 400 to 1400 bar, preferably 450 to 1000 bar.

Preferably a high-pressure homogenizer, such as GEA Niro Soavi Homogenizers (Parma,
Italy) is used. High pressure homogenisation is a mechanical process, which works by forcing a fluid material through a narrow gap (the homogenizing nozzle) at high pressure. The fluid material is subjected to high shear by the sudden restriction of flow under high pressure through a restrictive valve.

Especially when the bran is mustard bran, preferably derived from *Sinapis alba,* as a consequence of an HPH treatment, the sugar moiety profile of the bran particles changes. The sugar moiety profile of the bran particles has a ratio of the molar amount galactose + mannose versus arabinose. The amount of those sugars comprised by the particles is based on the amount of those sugars as such (e.g. as free sugar) plus the amount which can be released therefrom by hydrolysis (e.g. as moiety of larger molecule structures). Preferably the ratio of the molar amount of galactose + mannose versus arabinose of the bran particles is determined based on the method as set-out below.

Especially in case of mustard bran, without wishing to be bound by theory it is believed that upon contact with water, mucilage can form around and remains largely attached to a mustard bran particle. (Hydrated) mustard bran particles as such (i.e. including the mucilage) comprises a variety of polysaccharides. Different types of polysaccharides can be distinguished based on characteristic monosaccharide moieties, like glucose, mannose, galactose, arabinose etc., resulting in a characteristic sugar composition for a given polysaccharide. The HPH treatment is believed to release a certain part of the mucilage from the mustard bran particles. Released mucilage (*i.e.* not physically attached to the mustard bran particles) can be easily separated from the mustard bran particles for example by centrifugation. The released mucilage surprisingly comprises a certain subset of the polymers-types present in the original mustard bran particle and as such alters the sugar moiety profile of the remaining mustard bran particle.

Before applying an HPH treatment, the mustard bran particles preferably have a combined molar amount of galactose + mannose, which is at least 0.85 times the molar amount of arabinose. Said sugar ratio of the mustard bran particles is measured as set out below. Preferably the mustard bran particles provided at step a) have a (galactose + mannose)/arabinose ratio which is at least 0.87, more preferably of at least 0.9, even more preferably of at least 0.95, still more preferably of at least 0.97 and still even more preferably of at least 1.05. After an HPH treatment the mustard bran particles preferably have a molar amount of galactose plus mannose of at most 0.75 times, more preferably of at most 0.7, even more preferably at most 0.65, still even more preferably at most 0.63 and still even more preferably at most 0.60 times the molar amount of arabinose.

### Structurant

Oil-in-water emulsions often comprise thickeners. In the present invention it was found that thickeners are not needed to provide a homogenous texture, or desired viscosity which is recognised by the consumer as resembling that of an equivalent mayonnaise product comprising yolk.

The total concentration of starch, including native starch, modified starch; gums; pectins; and other hydrocolloids in the composition of the invention is preferably maximally 2 wt%, more preferably maximal 1% by weight, even more preferably maximally 0.5% by weight, even more preferably maximally 0.1% by weight, based on the weight of the food composition. It may be preferred that the amount of starch, preferably modified starch, is maximally 2% by weight, more preferably maximal 1% by weight, even more preferably maximally 0.5% by weight, even more preferably maximally 0.1% by weight, based on the weight of the food composition. It may be preferred that the amount of starch originating from *Sinapis alba* is less than 0.03% by weight, based on the weight of the food composition, preferably less than 0.01 wt%, preferably is absent. It may be preferred that the amount of gums is maximally 1% by weight, preferably maximally 0.5% by weight, preferably maximally 0.1% by weight, based on the weight of the food composition. It may be preferred that the amount of fiber, such as citrus fiber, is maximally 1% by weight, preferably maximally 0.5% by weight, preferably maximally 0.1% by weight, based on the weight of the food composition.

The food composition of the invention is preferably free from thickeners. It may be preferred that the composition is free from starch, or free from modified starch. It may be preferred that the composition is free from gum, such as for example free from xanthan gum. The food composition of the invention is preferably free from starch or gum or both. It may be preferred that the composition is free from fiber, such as free from citrus fiber.

### Acidulant and pH

The composition of the invention preferably has a pH ranging from 2 to 5, preferably ranging from 2.5 to 4.5, more preferably of from 3.0 to 4.5.

It is preferred that acid is present in the composition. Preferably the acid comprises organic acid. More preferably, the acid is organic acid. Preferably, the composition comprises an acid selected from the group consisting of acetic acid, citric acid, and mixtures thereof, most preferably, the composition comprises acetic acid. Therefore, it may be preferred that the composition comprises vinegar.

Preferably the composition of the invention has a total titratable acidity ranging from 0.03% to 3% by weight expressed as acetic acid, preferably from 0.05% to 2% by weight, preferably from 0.1% to 1% by weight. Acetic acid is preferably present in an amount of more than 50 wt%, more preferably more than 80 wt%, even more preferably more than 90 wt%, even more preferably more than 95 wt% based on the weight of the total amount of acid in the composition. It is preferred, that the organic acid, preferably the acetic acid, is added in the form of vinegar. If citric acid is present, this is preferably added in the form of lemon juice.

The acids as described in this specification include their corresponding salts which are in equilibrium with the acids (acetates, citrates). In case a concentration of an acid is provided, then this concentration refers to total concentration of the acid and its corresponding salt.

### Other ingredients

The composition of the invention preferably contains additionally other ingredients than already specifically mentioned in here. It may be preferred that the composition contains herbs and/or spices. In case such ingredients are present in the composition, then generally their total concentration is preferably at least 0.1% by weight, and preferably maximally 10% by weight, preferably maximally 5% by weight. It may be preferred that the composition comprises added flavours, more preferably oil-dissolvable flavours.

The composition of the invention may comprise sugar and/or salt.

Total alkaline metal salt, for example sodium chloride, may be present to an extent of from 0.1 to 5 wt%, based on the weight of the composition.

The composition may further comprise ethylenediaminetetraacetic acid (EDTA).

With the use of plant protein and bran, egg-derived emulsifier could be omitted, while still obtaining a smooth homogeneous texture and appearance of compositions as known from equivalent compositions prepared with egg-derived emulsifier. It is therefore optimally suitable to prepare a composition, such as a mayonnaise or salad dressing composition, for consumers that prefer not to eat food product comprising ingredients from animal origin. Accordingly, the composition is preferably free from proteins of animal origin. The composition is preferably free from egg-derived ingredient, more preferably free from ingredients of animal origin. "Animal origin" includes products originating from an animal itself, but also products produced by an animal, like eggs or milk, as the skilled person understands.

With the use of plant protein and bran, a homogenous texture could be obtained. For example, such a homogenous texture is smooth and does not have a curdled appearance. The rheological properties of the composition can be expressed in elastic modulus G' (in Pa) and Stevens Value (in grams). The G' preferably is between 1000 and 4000 Pa, preferably between 1500 and 3000 Pa, as measured at 20 °C. The Stevens Value (in grams) is preferably of between 50g and 400g, more preferably of between 100 and 200g, and even more preferably of between 100g and 150g, as measured at 20 °C.

The droplet size D3.3 is preferably from 0.2 to 75, more preferably of between 5 and 50 µm, most preferably of between 10 and 30 microns, see M. Alderliesten, Particle & Particle Systems Characterization 8 (1991) 237-241; for definitions of average diameters).

### Preferred composition

A preferred composition according to the invention may be:
An oil-in-water emulsified food composition comprising:
   - Water,
   - Vegetable oil, in an amount of from 65 to 80 wt%, based on the weight of the food composition.
   - Plant protein, in an amount of from 0.3 to 5 wt%, based on the weight of the food composition, wherein the plant protein is selected from the group consisting of potato protein, pea protein, lentil protein, chick pea protein, soy protein, and mixtures thereof.
   - Bran of mustard seed from the species *Synapis alba* or of cereal grain, in an amount of from 0.2 to 2 wt%, based on the weight of the food composition.
wherein the composition is free from egg-derived ingredients, and
wherein the bran particles have a d(0.9) of at most 600 microns

Another preferred composition may be:
An oil-in-water emulsified food composition comprising:
   - Water,
   - Vegetable oil, in an amount of from 65 to 80 wt%, based on the weight of the food composition.
   - Plant protein, in an amount of from 0.3 to 1.5 wt%, based on the weight of the food composition, wherein the composition comprises from 0.3 to 1.5 wt% of potato protein, based on the weight of the food composition,
   - Bran of mustard seed from the species *Synapis alba*, in an amount of from 0.2 to 2 wt%, based on the weight of the food composition,
wherein the composition is free from egg-derived ingredients, and
wherein the bran particles have a d(0.9) of at most 600 microns

The composition of the invention is preferably a mayonnaise or a salad dressing, preferably a mayonnaise.

### Preparation method of the composition of the invention

In a further aspect, the present invention relates to a method to provide a composition according to the first aspect of the invention.

In particular, the invention relates in its second aspect to a pprocess for manufacturing an oil-in-water emulsified food composition according to any one of the preceding claims, the process comprising the steps of:
a) providing a water phase comprising water and bran of mustard seed or of cereal grain;
b) heating the water phase to a temperature of above 65 °C,
c) homogenizing the water phase, wherein step b) and c) can be carried out in any order,
   wherein the homogenization involves high pressure homogenization,
d) adding plant protein after both step b) and c) have been carried out,
e) adding vegetable oil to the water phase, after both step b) and c) have been carried out, wherein step d) and e) can be carried out in any order,
f) homogenizing the combination resulting from carrying out steps a) to e), to result in an oil-in-water emulsified food product.

According to step a) of the process of the invention, a water phase is prepared, comprising water and bran of mustard seed or of cereal grain. The water phase can be prepared by adding bran to water and gently stir till a homogenous dispersion is obtained. The amount of bran that is added is from 0.2 to 2 wt%, preferably from 0.3 to 1.5 wt%, more preferably of from 0.3 to 1 wt%, based on the weight of the resulting food composition. The amount of bran is preferably from 1 to 10, more preferably of from 1.5 to 5 wt%, even more preferably 2 to 3 wt% based on the weight of the water phase.

Apart from bran, flavours like salt or sugar may be added to the water.

In step b) of the process the resulting water phase is heated. The water phase is preferably heated to a temperature of between 65 and 90 °C, preferably of between 70 and 85 °C, more preferably of between 75 and 85 °C.

The heating time is dependent on the temperature that is applied, as the skilled person will understand. Suitable time is from at least 30 seconds to 3 minutes, preferably from 45 seconds to 2.5 minutes. The skilled person will understand that the higher heating temperatures will allow for the shorter heating times.

After heating, the water phase is typically cooled or allowed to cool down. Step b) of the process therefore preferably includes cooling or allowing to cool down after heating. It is preferred, that the water phase is cooled, preferably to a temperature of from 15 to 40 °C, more preferably of from 18 to 25 °C.

As described above, in step c) of the process, the water phase is subjected to high pressure homogenisation (HPH). Such treatment can be carried out for example before the heat treatment of step b), or after it. An HPH treatment after the heating step is preferred. If high pressure homogenisation is applied, it is preferably with a pressure drop of from 300 to 2000 bar, preferably 400 to 1400 bar, preferably 450 to 1000 bar. Preferably, a high-pressure homogenizer, such as GEA Niro Soavi Homogenizers (Parma, Italy) is used.

In step d) of the process, the water phase having undergone heating and high-pressure homogenisation, is combined with plant protein. Plant protein added in step d) is preferably selected from the group consisting of potato protein, pea protein, lentil protein, chickpea protein and mixtures thereof. The plant protein is preferably potato protein, even more preferably potato protein with a molar weight of the protein from 250 to 400, more preferably of from 280 to 350 grams per mole, or from 5 to 35 kDa. The plant protein is preferably added in an amount of from 0.3 to 5 wt%, preferably in an amount of from 0.7 to 2.5 wt%, more preferably in an amount of from 0.9 to 1.5 wt %, based on the weight of the resulting food composition.

In step e) of the process of the invention, the water phase is mixed with vegetable oil. The weight ratio of water phase to vegetable oil is preferably of from 35:65 to 15:85%, preferably of from 35:65 to 20:80, even more preferably of from 30:70 to 25:75.

Steps d) and e) can be carried out in any order. Vegetable oil may be added to the water phase resulting from step c) followed by addition of plant protein. Simultaneous addition of vegetable oil and plant protein to the water phase may be preferred. It is more preferred, that plant protein is added to the water phase resulting from step c), followed by addition of vegetable oil. In case acidulant is used, such as preferably vinegar, this can preferably be added in step e) with the oil, wherein preferably step e) is carried out after step d).

In step f) of the process, the mixture resulting from steps a) to e) is homogenised. Conventional homogenisers can be applied, to create an oil-in-water emulsion, as known to the skilled person, such as a colloid mill. Homogenisation results in an emulsified food composition. Accordingly, the invention preferably relates to an emulsified food composition obtainable by, more preferred, obtained by, the process of the invention.

Homogenisation is preferably carried out to achieve an oil droplet size D3.3 which is preferably from 0.2 to 50 micrometers, more preferably of between 1 and 40 micrometers, see M. Alderliesten, Particle & Particle Systems Characterization 8 (1991) 237-241; for definitions of average diameters).

The invention may further relate to a composition obtainable by, preferably obtained by, the process of the invention.

### Use of bran

The use of bran of mustard seed or of cereal grain in an oil-in-water emulsion comprising vegetable oil in an amount of from 65 to 80 wt% and plant protein, to provide a smooth texture is also disclosed.

### Methods

### Methods - Texture measurements

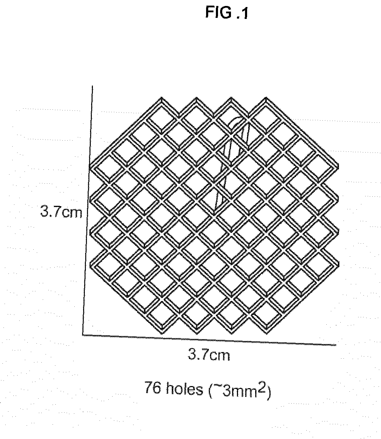

*Thickness* - *Stevens value:* the Stevens value is determined at 20°C by using a Stevens LFRA Texture Analyser (ex Brookfield Viscometers Ltd., UK) with a maximum load/measuring range of 1000 grams, and applying a penetration test of 25mm using a grid, at 2mm per second penetration rate, in a cup having a diameter of 65mm, that contains the emulsion; wherein the grid comprises square openings of approximately 3x3mm, is made up of wire with a thickness of approximately 1mm, and has a diameter of 40mm. One end of a shaft is connected to the probe of the texture analyser, while the other end is connected to the middle of the grid. The grid is positioned on the flat upper surface of the emulsion in the cup. Upon starting the penetration test, the grid is slowly pushed downward into the emulsion by the texture analyser. The final force exerted on the probe is recorded, giving the Stevens value in gram. A drawing of the grid is given in Figure 1. The grid is made from stainless steel, and has 76 holes, each hole having a surface area of approximately 3x3 mm.

*Viscosity:* The viscosity can be determined by using a Brookfield viscometer (ex Brookfield Viscometers Ltd., UK) operated at 50rpm and 20°C, using the appropriate spindle for the expected viscosity (according to ISO2555), in this case spindle #7. The spindle, connected to the viscometer probe, is lowered into the emulsion until the indentation on the spindle is reached. The resistance measured during the spinning of the spindle in the emulsion, is the viscosity in milli Pascal per second.

### Mustard bran particle pre-treatment for particle size and sugar moiety analysis

In case the mixture was not pourable, it is stirred with a spoon and diluted with Milli-Q water until pourable. A Centrifugation tube (500ml, nr. 355605, Beckman Coulter, Fullerton, CA, USA) is filled with 350 gr of the mixture. The mixture is centrifuged for 10 minutes at 10,000*g in a Beckman Coulter Avanti J-26S XP centrifuge, with slow deceleration, after which the supernatant (including white, viscous substance on top of sediment) is discarded. Water is added to the sediment until a total of 350 gr in the centrifugation tube and the sediment is redispersed with a spatula and the mixture is shaken by hand until no particles larger than 2 mm were visible. The sedimentation and washing step is repeated to a total of 4 times. After the fourth centrifugation, the sediment is redispersed with a spatula in water, so as to obtain a spoonable slurry.

The particle size distribution of a sample of the slurry is analyzed as described below. The remainder of the slurry is freeze dried and the dried material is ground to a powder by hand using mortar and pestle.

### Mustard bran particle size distribution

To measure the particle size distribution, samples comprising mustard bran particles are diluted to approx 0.5% (w/w) with Milli-Q water, to a total of 10 ml in a 15 ml disposable conical tube from VWR (Cat. No. 89039-664). The tube is closed and shaken manually to remove material from the tube wall and to create a first crude dispersion and left overnight at 20 degrees Celsius. Subsequently the tube is agitated for 120 seconds using a Retsch Mix TM 01 Vortex mixer (Retsch, Haan, Germany) having the stirring speed indicator set at maximum speed. Just before adding the sample to the dispersing unit of the Mastersizer, the tube content is mixed using a disposable plastic 3 ml pipette. For particle size analysis a Mastersizer 2000 (Static light scattering) from Malvern Instruments (Enigma Business Park, Grovewood Road, Worcestershire WR14 1XZ, UK) was used. The Mastersizer is equipped with a Hydro 2000S dispersing unit. Dispersing unit is used at a room temperature of about 20 degrees Celsius. Total liquid volume of the dispersing unit is approximately 130 ml. The pump speed/stirrer of the unit is set at 1400 rpm and no ultrasound is used. Measurement- and background time are set at 12 seconds. A sample is added to the dispersing unit until the obscuration is between 7 and 8. Per aliquot 3 measurements are automatically done with a delay time of 10 seconds. For calculation of the particle size distribution the general purpose model of the Mastersizer 2000 software (version 5.60) is used, with enhanced calculation sensitivity, and spherical particle shapes assumed. For the dispersed phase a refractive index of 1.5 was used. For the water phase the refractive index of 1.33 is used. The averages of the 3 measurements is used to determine the particle size as characterised by the d(0.9) value.

### Method for determining the ratio of galactose + mannose versus arabinose

This method is as described by de Souza et al.(Carbohydrate polymers, 2013, 95, 657-663), with a few adaptations: The pre-solubilization step is performed at room temperature. The sample concentration at the hydrolysis step was 14% (w/w) D₂SO₄ in D₂O. The hydrolysis duration was 180 min. The ¹H-NMR spectra are recorded with a zg30 pulse sequence and a relaxation delay of 60s. Approximately 15 mg of the freeze dried and powdered sediment is accurately weighed in a 15 mL glass culture tube. For pre-solubilization, 1 mL of 72% (w/w) D₂SO₄ in D₂O is added to the sample. The sample is sealed and stirred at room temperature for 60 min. After this step, 6.2 mL D₂O is added to the sample until the final concentration of 14% (w/w) D₂SO₄ in D₂O is reached. The sample is sealed and incubated at 100 °C for 180 min. After the hydrolysis, the sample is allowed to cool down to room temperature. Subsequently 1 mL of maleic acid internal standard solution is added. The final solution is pipetted into a 3 mm NMR tube. The 1H NMR spectra are recorded at 290 K with an Avance III 600 MHz NMR-spectrometer equipped with a 5 mm cryoprobe. The NMR-spectra are recorded by using a standard pulse sequence (zg30). A relaxation delay of 60s is used.

The invention will now be exemplified by the following, non-limiting examples.

### Example

### Ingredients

| | |
|---|---|
| Soybean oil | ex Cargill (Amsterdam, the Netherlands) |
| Mustard bran | Fine yellow mustard bran, #412, ex G.S. Dunn Limited (Hamilton, Ontario, Canada); |
| Vinegar spirit 12% | 12% Branntweinessig, ex Carl Kühne (Hamburg, Germany). |
| Potato protein | Solanic 300, Avebe |

### Oil phase

| | |
|---|---|
| Soybean oil | 69.8 |
| total | 69.8 wt% |

### Water phase

| | Comp. Ex. | Example 1 |
|---|---|---|
| Flavours | 5.0 | 5.0 |
| Demi water | 10.3 | 9.9 |
| Mustard bran | 0 | 0.4 |
| total | 15.3 wt% | 15.3 wt% |

### Acid phase

| | |
|---|---|
| Spirit vinegar | 2.5 |
| total | 2.5 wt% |

### Emulsifier phase

| | |
|---|---|
| Potato protein | 0.8 |
| Demi water | 11.6 |
| total | 12.4 wt% |

### Preparation of water phase

- Flavour (including salt, NaCl) was added to water, to provide a water phase.
- Slowly the mustard bran was added to the water phase under stirring until fully dispersed.
- The water phase comprising mustard bran, was heated, where indicated for the relevant sample, to 75 °C for 2 minutes, using a batch cooker (Cook & Cool unit, Selo, Hengelo, the Netherlands).
- The resulting water phase was put through a High Pressure Homogeniser (Niro Soavi NS 3006L, GEA, Dusseldorf, Germany), at 600 bars.

### Preparation of emulsion

- The water phase (including saltwater and mustard bran) was combined with the emulsifier phase and mixed in a 40L agitated pre-emulsion vessel.
- The oil phase was dosed, while continuously stirring.
- Halfway through the oil addition, the acid phase was added.
- After all oil had been dosed, the formed pre-emulsion was pumped through a colloid mill for emulsification and collected in glass jars.

### Result

Both example 1 and the comparative example showed a mayonnaise composition which was stable and solid. The pH was 3. However, the appearance of the product of the comparative example (high oil, low pH) showed a 'curdled' appearance, resembling that of cottage cheese. The product resulting from Example 1, comprising bran, had a smooth mayonnaise texture, resembling the appearance of a mayonnaise prepared with egg yolk instead of plant protein.

## Claims

1. An oil-in-water emulsified food composition comprising:
• Water,
• Vegetable oil, in an amount of from 65 to 80 wt%, based on the weight of the food composition.
• Plant protein,
• 0.2 to 2 wt% of bran of mustard seed,
wherein the composition is free from egg-derived ingredients, and wherein the composition has a pH of from 2 to 5.

2. The food composition according to claim 1, wherein the plant protein is selected from the group consisting of pulse protein, oil seed protein, tuber protein and mixtures thereof, preferably wherein the plant protein is selected from pea protein, lentil protein, chickpea protein, lupin protein, faba bean protein, rape seed protein, canola protein, soy protein, potato protein and mixtures thereof, more preferably potato protein, pea protein, lentil protein, chick pea protein, soy protein, and mixtures thereof.

3. The food composition according to claim 1 or 2, wherein the plant protein is selected from the group consisting of potato protein, pea protein, lentil protein, chickpea protein and mixtures thereof.

4. The food composition according to any one of the preceding claims, wherein the plant protein is potato protein.

5. The food composition according to any one of the preceding claims, wherein the molar weight of the protein is from 250 to 400, more preferably of from 280 to 350 grams per mole.

6. The food composition according to any one of the preceding claims, wherein the plant protein is present in an amount of from 0.3 to 5 wt%, preferably in an amount of from 0.5 to 2.5 wt%, more preferably in an amount of from 0.7 to 1.5 wt%.

7. The food composition according to any one of the preceding claims, wherein the bran particles have a d(0.9) of at most 600 microns, more preferably of at most 500 microns, even more preferably of at most 400 microns, still even more preferably of at most 350 microns and still even more preferably of from 150 to 300 microns.

8. The food composition according to any one of claims 1 to 7, wherein the bran is mustard bran originating from the species *Sinapis alba.*

9. The food composition according to any one of the preceding claims, wherein the amount of bran is from 0.3 to 1.5 wt%, more preferably of from 0.5 to 1 wt%, based on the weight of the food composition.

10. The food composition according to any one of the preceding claims, wherein the maximum amount of starch present in the composition is 2 wt%, preferably is 1 wt%, based on the weight of the food composition.

11. The food composition according to any one of the preceding claims, wherein the composition is free from starch.

12. The food composition according to any one of the preceding claims, wherein the food composition is a mayonnaise.

13. Process for manufacturing an oil-in-water emulsified food composition according to any one of the preceding claims, the process comprising the steps of:
a) providing a water phase comprising water and bran of mustard seed, wherein the bran is added in an amount of 0.2 to 2 wt% based on the weight of the resulting composition;
b) heating the water phase to a temperature of above 65 °C,
c) homogenizing the water phase, wherein step b) and c) can be carried out in any order,
wherein the homogenization involves high pressure homogenization,
d) adding plant protein after both step b) and c) have been carried out,
e) adding vegetable oil to the water phase after both steps b) and c) have been carried out, wherein step d) and e) can be carried out in any order,
f) homogenizing the combination resulting from steps a) to e), to result in an oil-in-water emulsified food composition.

14. The process according to claim 13, wherein homogenization in step c) is carried out using high pressure homogenisation with a pressure drop of from 300 to 2000 bar, preferably 400 to 1400 bar, preferably 450 to 1000 bar.

## Patentansprüche

1. Emulgierte ÖI-in-Wasser-Lebensmittelzusammensetzung, umfassend:
• Wasser,
• Pflanzenöl in einer Menge von 65 bis 80 Gew.-%, bezogen auf das Gewicht der Lebensmittelzusammensetzung,
• Pflanzenprotein,
• 0,2 bis 2 Gew.-% Kleie von Senfsamen,
wobei die Zusammensetzung frei von aus Eiern stammenden Inhaltsstoffen ist und die Zusammensetzung einen pH-Wert von 2 bis 5 aufweist.

2. Lebensmittelzusammensetzung nach Anspruch 1, wobei das Pflanzenprotein aus der Gruppe ausgewählt ist, bestehend aus Hülsenfrüchteprotein, Ölsamenprotein, Knollenprotein und Mischungen davon, wobei das Pflanzenprotein vorzugsweise ausgewählt ist aus Erbsenprotein, Linsenprotein, Kichererbsenprotein, Lupinenprotein, Ackerbohnenprotein, Rapssamenprotein, Canolaprotein, Sojaprotein, Kartoffelprotein und Mischungen davon, bevorzugter aus Kartoffelprotein, Erbsenprotein, Linsenprotein, Kichererbsenprotein, Sojaprotein und Mischungen davon.

3. Lebensmittelzusammensetzung nach Anspruch 1 oder 2, wobei das Pflanzenprotein aus der Gruppe, bestehend aus Kartoffelprotein, Erbsenprotein, Linsenprotein, Kichererbsenprotein und Mischungen davon, ausgewählt ist.

4. Lebensmittelzusammensetzung nach irgendeinem der vorhergehenden Ansprüche, wobei das Pflanzenprotein Kartoffelprotein ist.

5. Lebensmittelzusammensetzung nach irgendeinem der vorhergehenden Ansprüche, wobei das Molekulargewicht des Proteins 250 bis 400, bevorzugter 280 bis 350 Gramm pro Mol beträgt.

6. Lebensmittelzusammensetzung nach irgendeinem der vorhergehenden Ansprüche, wobei das Pflanzenprotein in einer Menge von 0,3 bis 5 Gew.-%, vorzugsweise in einer Menge von 0,5 bis 2,5 Gew.-%, bevorzugter in einer Menge von 0,7 bis 1,5 Gew.-%, vorliegt.

7. Lebensmittelzusammensetzung nach irgendeinem der vorhergehenden Ansprüche, wobei die Kleieteilchen einen d(0,9) von höchstens 600 Mikrometern, bevorzugter von höchstens 500 Mikrometern, noch bevorzugter von höchstens 400 Mikrometern, sogar noch bevorzugter von höchstens 350 Mikrometern und sogar noch bevorzugter von 150 bis 300 Mikrometern aufweisen.

8. Lebensmittelzusammensetzung nach irgendeinem der Ansprüche 1 bis 7, wobei die Kleie Senfkleie ist, die von der Spezies Sinapis alba stammt.

9. Lebensmittelzusammensetzung nach irgendeinem der vorhergehenden Ansprüche, wobei die Menge der Kleie 0,3 bis 1,5 Gew.-%, bevorzugter 0,5 bis 1 Gew.-%, bezogen auf das Gewicht der Lebensmittelzusammensetzung, beträgt.

10. Lebensmittelzusammensetzung nach irgendeinem der vorhergehenden Ansprüche, wobei die maximale Menge der in der Zusammensetzung vorliegenden Stärke 2 Gew.-%, vorzugsweise 1 Gew.-%, bezogen auf das Gewicht der Lebensmittelzusammensetzung, beträgt.

11. Lebensmittelzusammensetzung nach irgendeinem der vorhergehenden Ansprüche, wobei die Zusammensetzung frei von Stärke ist.

12. Lebensmittelzusammensetzung nach irgendeinem der vorhergehenden Ansprüche, wobei die Lebensmittelzusammensetzung eine Mayonnaise ist.

13. Verfahren zur Herstellung einer emulgierten Öl-in-Wasser-Lebensmittelzusammensetzung nach irgendeinem der vorhergehenden Ansprüche, wobei das Verfahren die Schritte umfasst:
a) Bereitstellen einer Wasserphase, umfassend Wasser und Kleie von Senfsamen, wobei die Kleie in einer Menge von 0,2 bis 2 Gew.-%, bezogen auf das Gewicht der anfallenden Zusammensetzung, zugefügt wird;
b) Erhitzen der Wasserphase auf eine Temperatur oberhalb 65°C,
c) Homogenisieren der Wasserphase, wobei Schritt b) und c) in beliebiger Reihenfolge durchgeführt werden können,
wobei die Homogenisierung eine Hochdruckhomogenisierung einbezieht,
d) Zugeben von Pflanzenprotein, nachdem sowohl Schritt b) als auch c) durchgeführt ist,
e) Zugeben von Pflanzenöl zu der Wasserphase, nachdem sowohl Schritt b) als auch c) durchgeführt ist, wobei Schritt d) und c) in beliebiger Reihenfolge durchgeführt werden können,
f) Homogenisieren der aus den Schritten a) bis e) resultierenden Kombination, um eine emulgierte ÖI-in-Wasser-Lebensmittelzusammensetzung zu erhalten.

14. Verfahren nach Anspruch 13, wobei die Homogenisierung im Schritt c) unter Anwendung einer Hochdruckhomogenisierung mit einem Druckabfall von 300 bis 2000 bar, vorzugsweise von 400 bis 1400 bar, vorzugsweise von 450 bis 1000 bar, durchgeführt wird.

## Revendications

1. Composition alimentaire émulsifiée huile-dans-eau comprenant :
• de l'eau,
• de l'huile végétale, dans une quantité de 65 à 80 % en masse, sur la base de la masse de la composition alimentaire.
• une protéine de plante,
• 0,2 à 2 % en masse de son de graine de moutarde,
dans laquelle la composition est exempte d'ingrédients dérivés de l'œuf, et dans laquelle la composition présente un pH de 2 à 5.

2. Composition alimentaire selon la revendication 1, dans laquelle la protéine de plante est choisie dans le groupe consistant en protéine de légumineuse, protéine de graine oléagineuse, protéine de tubercule et mélanges de celles-ci, de préférence dans laquelle la protéine de plante est choisie parmi une protéine de pois, protéine de lentille, protéine de pois chiche, protéine de lupin, protéine de féverole, protéine de graine de colza, protéine de canola, protéine de soja, protéine de pomme de terre et mélanges de celles-ci, encore mieux protéine de pomme de terre, protéine de pois, protéine de lentille, protéine de pois chiche, protéine de soja, et mélanges de celles-ci.

3. Composition alimentaire selon la revendication 1 ou 2, dans laquelle la protéine de plante est choisie dans le groupe consistant en protéine de pomme de terre, protéine de pois, protéine de lentille, protéine de pois chiche et mélanges de celles-ci.

4. Composition alimentaire selon l'une quelconque des revendications précédentes, dans laquelle la protéine de plante est une protéine de pomme de terre.

5. Composition alimentaire selon l'une quelconque des revendications précédentes, dans laquelle la masse molaire de la protéine est de 250 à 400, encore mieux de 280 à 350 grammes par mole.

6. Composition alimentaire selon l'une quelconque des revendications précédentes, dans laquelle la protéine de plante est présente dans une quantité de 0,3 à 5 % en masse, de préférence dans une quantité de 0,5 à 2,5 % en masse, encore mieux dans une quantité de 0,7 à 1,5 % en masse.

7. Composition alimentaire selon l'une quelconque des revendications précédentes, dans laquelle les particules de son présentent un d(0,9) d'au plus 600 microns, de préférence d'au plus 500 microns, encore mieux d'au plus 400 microns, bien mieux encore d'au plus 350 microns et particulièrement de préférence de 150 à 300 microns.

8. Composition alimentaire selon l'une quelconque des revendications 1 à 7, dans laquelle le son est un son de moutarde provenant de l'espèce *Sinapis alba.*

9. Composition alimentaire selon l'une quelconque des revendications précédentes, dans laquelle la quantité de son est de 0,3 à 1,5 % en masse, de préférence de 0,5 à 1 % en masse, sur la base de la masse de la composition alimentaire.

10. Composition alimentaire selon l'une quelconque des revendications précédentes, dans laquelle la quantité maximum d'amidon présente dans la composition est de 2 % en masse, de préférence est de 1 % en masse, sur la base de la masse de la composition alimentaire.

11. Composition alimentaire selon l'une quelconque des revendications précédentes, dans laquelle la composition est exempte d'amidon.

12. Composition alimentaire selon l'une quelconque des revendications précédentes, dans laquelle la composition alimentaire est une mayonnaise.

13. Procédé pour la fabrication d'une composition alimentaire émulsifiée huile-dans-eau selon l'une quelconque des revendications précédentes, le procédé comprenant les étapes de :
a) fourniture d'une phase d'eau comprenant de l'eau et du son de graine de moutarde, dans lequel le son est ajouté dans une quantité de 0,2 à 2 % en masse sur la base de la masse de la composition résultante ;
b) chauffage de la phase d'eau à une température supérieure à 65°C,
c) homogénéisation de la phase d'eau, dans lequel les étapes b) et c) peuvent être réalisées dans un ordre quelconque,
dans lequel l'homogénéisation implique une homogénéisation haute pression,
d) addition de protéine de plante après que les deux étapes b) et c) ont été réalisées,
e) addition d'huile végétale à la phase d'eau après que les deux étapes b) et c) ont été réalisées, dans lequel les étapes d) et e) peuvent être réalisées dans un ordre quelconque,
f) homogénéisation de la combinaison résultant des étapes a) à e),
pour résulter en une composition alimentaire émulsifiée huile-dans-eau.

14. Procédé selon la revendication 13, dans lequel l'homogénéisation dans l'étape c) est réalisée en utilisant une homogénéisation haute pression avec une chute de pression de 300 à 2 000 bar, de préférence 400 à 1 400 bar, de préférence 450 à 1 000 bar.
